# FASCICULE DE BREVET EUROPEEN

(11) **EP 0 545 804 B1**
(45) Date de publication et mention de la délivrance du brevet: **07.05.1997**
(21) Numéro de dépôt: 92403231.1
(22) Date de dépôt: 30.11.1992
(51) Int. Cl.: B09B 3/00, C03B 1/00

(54) **Procédé et installation pour la vitrification ou la mise en fusion de résidus solides provenant de l'épuration des fumées issues d'un four d'incinération**
Verfahren und Einrichtung für die Verglasung oder Einschmelzung von festen Rückständen aus der Rauchgasreinigung eines Müllverbrennungsofens
Method and plant for the vitrification or melting of solid residues from the purification of fumes exhausted by a waste incinerator

(30) Priorité: 05.12.1991 FR 9115098
(43) Date de publication de la demande: 09.06.1993
(73) Titulaire: CONSTRUCTIONS INDUSTRIELLES DE LA MEDITERRANEE- CNIM, F-75008 Paris (FR)
(72) Inventeur: Tabaries, Franck, F-83000 Toulon (FR); Durand, Jean-Pierre, F-83500 La Seyne Sur Mer (FR)
(74) Mandataire: Durand, Yves Armand Louis

(56) Documents cités:
- EP-A- 0 294 362
- EP-A- 0 335 033
- EP-A- 0 359 003
- EP-A- 0 417 520
- EP-A- 0 437 679
- DE-A- 3 939 202
- US-A- 4 191 546
- VGB KRAFTWERKSTECHNIK. vol. 70, no. 5, Mai 1990, ESSEN DE pages 428 - 430 'VGB- KONFERENZ "RUECKSTAENDE AUS DER MUELLVERBRENNUNG".

## Description

La présente invention concerne un procédé de traitement de résidus solides provenant de l'épuration des fumées d'incinération de déchets ménagers ou industriels, pour par exemple vitrifier ou mettre en fusion ces résidus, et une installation pour la mise en oeuvre de ce procédé.

On connaît, de EP-A-0437679 un procédé de traitement des résidus solides provenant de l'épuration des fumées issues d'un four d'incinération des déchets consistant à fondre ces résidus solides avec le mâchefer qui est le résidu solide directement issu du four d'incinération des déchets, à une température comprise entre 1100 et 1500°C et de préférence entre 1300 et 1500°C. Mais dans ce procédé, pendant la fusion de ces déchets et en raison des températures utilisées, une grande quantité de produits toxiques tels que Cd, Zn s'évapore.

On a alors, pour limiter la revaporisation des métaux toxiques, proposé des procédés de traitement qui consistent à utiliser, comme additif, afin d'abaisser la température de fusion, des fondants et/ou des oxydes formateurs de réseau. Les fondants généralement utilisés sont choisis parmi l'oxyde de bore (B₂O₃), l'oxyde de sodium (Na₂O), l'oxyde de potassium (K₂O). L'oxyde formateur de réseau le plus utilisé est la silice (SiO₂). Mais ces produits sont généralement très coûteux et le volume des déchets à mettre en décharge ou à recycler est augmenté.

On connaît également un procédé de vitrification de déchets industriels utilisant comme additif du verre au borosilicate qui est déposé sur la surface du bain de fusion du four, mais ce procédé nécessite l'adjonction d'oxyde de bore qui est très coûteux.

Par ailleurs, on connaît un procédé de vitrification de déchets radioactifs dans un four de fusion de verre, où les déchets sont amenés sous la surface chaude du bain de la masse de verre fondue, mais ce procédé nécessite un apport d'énergie important.

On connaît aussi l'utilisation de produits naturels comme additifs, tels que des roches d'origine volcanique, dans des procédés de traitement. Mais l'utilisation de ces produits entraîne un problème d'approvisionnement du fait de l'éloignement et de l'existence parfois précaire des carrières, et du fait des variations importantes de composition de ces produits suivant les veines des gisements ou la carrière d'origine.

De plus, l'inconvénient des procédés connus provient de la quantité importante d'additifs qui doit être ajoutée aux déchets à traiter.

Ainsi, le document US-A-491546 décrit un procédé de traitement de résidus solides qui consiste à fondre ces résidus solides avec un additif constitué de matériaux calcaires et optionnellement d'autres matériaux formateurs de verre afin d'obtenir un matériau vitreux.

Dans ce document, la présence d'un additif augmente le volume des déchets à mettre en décharge après traitement de résidus solides et également augmente le coût en matières premières nécessaires pour réaliser le traitement desdits résidus solides.

La présente invention a donc pour but de pallier tous les inconvénients ci-dessus et de réduire le flux global de résidus solides mis en décharges et issus de l'incinération des déchets ménagers ou industriels et de l'épuration des fumées correspondantes en utilisant, comme additif contenant des fondants et/ou des oxydes formateurs de réseaux, les résidus solides directement issus de l'incinération.

A cet effet l'invention a pour objet un procédé de traitement des résidus solides provenant de l'épuration des fumées issues d'un four d'incinération de déchets ménagers ou industriels du type consistant à fondre un mélange, constitué par au moins une fraction du mâchefer, directement issu de l'incinération des déchets ménagers ou industriels et des résidus solides provenant de l'épuration des fumées issues d'un four d'incinération de déchets ménagers ou industriels et à récupérer, après réaction, à la sortie du four de fusion, des produits liquides ou pâteux et des gaz résultant de l'élévation de température, lesdits produits liquides ou pâteux étant solidifiés pour bloquer ainsi les produits toxiques, caractérisé en ce que le mélange est réalisé de façon intime avant fusion et en ce que sa fusion est effectuée à une température comprise entre 1200°C et 1350°C.

Plus particulièrement, la fusion du mélange est effectuée à environ 1300°C.

Selon une caractéristique du procédé de l'invention, les gaz précités résultant de l'élévation de température sont recyclés vers l'entrée du four d'incinération des déchets ménagers ou industriels.

La quantité de mâchefer est comprise entre 10 et 90% en poids dudit mélange.

Elle est de préférence de 30% en poids dudit mélange.

La présente invention concerne également une installation pour la mise en oeuvre du procédé de l'invention comprenant un four d'incinération alimenté en déchets ménagers ou industriels par une première arrivée et en air de combustion par une conduite d'arrivée; un système d'évacuation des résidus solides issus directement de l'incinération des déchets ménagers ou industriels ou mâchefer; un système d'épuration des fumées relié à la sortie du four par une conduite; un système de récupération des résidus solides provenant du système d'épuration précité, deux systèmes de dosage respectivement du résidu solide constitué par une fraction du mâchefer issu du four d'incinération, et des résidus solides d'épuration provenant du système de récupération précité; et un four de fusion relié à la sortie des deux systèmes de dosage et à l'entrée d'un système de mise en décharge des produits solidifés caractérisé en ce qu'un mélangeur est interposé entre les deux systèmes de dosage précités et le four de fusion et en ce que ledit four de fusion est adapté pour obtenir une température de fusion comprise entre 1200°C et 1350°C.

Selon un mode de réalisation particulier, un système de refroidissement des gaz issus du four de fusion est relié par un conduit à la sortie du four de fusion et à l'entrée d'un système de filtration, ledit système de filtration étant relié au four d'incinération et à un système de récupération des matières solides.

Chacun des systèmes de dosage est constitué par une vis doseuse ou un gravimètre.

Le système de filtration peut être un système de filtration du type à manche ou à poche.

Le système d'épuration des fumées peut être du type sec, semi-humide ou humide.

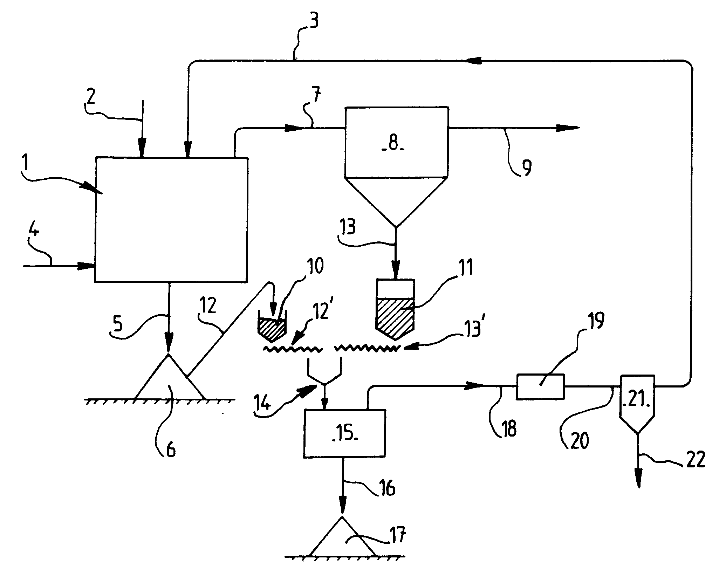

D'autres buts, détails et avantages de la présente invention apparaîtront plus clairement à la lecture de la description détaillée qui suit et se réfère au dessin annexé, donné uniquement à titre d'exemple.

Ce dessin est une vue schématique d'une installation conforme aux principes de l'invention.

Suivant un exemple de réalisation et en se reportant à la figure unique annexée, on voit que l'installation selon cette invention comprend un four d'incinération (1) alimenté en déchets ménagers ou industriels par une conduite d'arrivée (2). On voit en (3) une conduite d'arrivée des gaz recyclés introduits à l'entrée du four d'incinération. Une conduite (4) permet l'introduction d'air nécessaire à la combustion des déchets.

Les conduites (2) et (4) sont raccordées à deux côtés du four, respectivement.

Une conduite (5) assure l'extraction des mâchefers du four et les amène à un stockage intermédiaire (6).

Une conduite (7) permet d'extraire les résidus gazeux, ou fumées, pour les diriger vers un dispositif de traitement (8). Les résidus gazeux épurés quittent le dispositif de traitement au moyen d'une conduite (9) et sont dirigés dans l'atmosphère.

Les mâchefers et les résidus d'épuration sont ensuite stockés respectivement dans deux dispositifs (10) et (11) au moyen de deux conduites (12) et (13). Les mâchefers et les résidus d'épuration sont dosés au moyen de deux systèmes de dosage (12') et (13').

Un mélangeur (14) est relié à la sortie des systèmes de dosage (12') et (13') et à l'entrée d'un creuset de fusion (15). Une conduite (16) permet l'élimination des produits solidifiés, ou verre, pour les diriger vers une décharge (17). Une conduite (18) assure l'extraction des produits gazeux pour les diriger vers l'entrée d'un système de refroidissement (19). Une conduite (20) relie la sortie du système de refroidissement (19) et l'entrée d'un système de filtration (21). On voit en (22) une conduite assurant l'élimination des produits solides.

Pour une meilleure compréhension de l'invention, on décrira ci-après le fonctionnement et les avantages de l'installation qui vient d'être décrite.

On observera tout d'abord que cette installation permet le traitement de résidus solides provenant de l'épuration des fumées issues d'un four d'incinération de déchets ménagers ou industriels, pour par exemple vitrifier ou mettre en fusion ces résidus. L'additif contenant des fondants et/ou des oxydes formateurs de réseaux qui est mis en contact avec lesdits résidus solides est du mâchefer.

Une partie du mâchefer est criblée suivant une granulométrie compatible avec le creuset de fusion et le système d'alimentation utilisé. Le criblage du mâchefer est réalisé au moyen d'un tamis à mailles de 20 mm.

La granulométrie du mâchefer est donc comprise entre 0 et 20 mm.

Le mâchefer est ensuite intimement mélangé avec les résidus d'épuration dans des proportions allant de 10% à 90% en poids pour le mâchefer, et de 90% à 10% en poids pour les résidus d'épuration. La quantité de mâchefer utilisé est de préférence de 30% en poids et celle des résidus d'épuration est de 70% en poids pour 100% en poids du mélange précité.

Les résidus d'épuration sont constitués de fines cendres volantes entraînées par les gaz de combustion et de résidus de la déchloruration et/ou de la désulfuration et/ou de la captation des métaux lourds. Ces résidus de la déchloruration de la désulfuration et de la captation des métaux lourds sont de tout type et peuvent se retrouver mélangés avec les cendres volantes si un dépoussièrage préalable ne précède pas le système de déchloruration de la désulfuration, de la captation des métaux lourds. Les résidus d'épuration proviennent du système de traitement des fumées, lesdites fumées étant issues de l'incinération des déchets ménagers ou industriels. Ces résidus d'épuration contiennent des produits organiques, des produits minéraux toxiques et lixiviables et doivent être traités avant leur mise en décharge.

Le traitement des fumées peut être réalisé selon une voie sèche, une voie semi-humide ou une voie humide.

Le traitement par voie sèche ou semi-humide est réalisé par l'injection de chaux au niveau des fumées permettant ainsi, par la formation de chlorure de calcium solide, d'éliminer l'acide chlorhydrique.

Le traitement par voie humide permet également d'éliminer l'acide chlorhydrique par un lavage des fumées avec une solution liquide et une neutralisation de ladite solution par de la chaux.

Les cendres présentes dans les fumées peuvent être éliminées en amont du système de traitement, au moyen d'un dépoussiéreur.

Les dosages de mâchefer et des résidus d'épuration sont réalisés au moyen d'une vis de dosage ou par gravimétrie.

Le mâchefer et les résidus d'épuration dosés, sont intimement mélangés dans un mélangeur.

Le mélange est ensuite introduit dans un four de fusion. Le mélange est soumis à une élévation de température et donne la formation d'un magma.

L'élévation de température et l'énergie nécessaire à l'obtention du magma sont fournies par diverses sources énergétiques. Les sources énergétiques utilisées sont fournies par l'électricité tel que le plasma, l'arc, la résistance, l'induction ou par la combustion des combustibles contenus dans les produits à traiter ou de combustibles auxiliaires.

La température du mélange est comprise entre 1200° et 1350°C. Elle est de préférence d'environ 1300°C.

Sans additif, la température de fusion des déchets est supérieure à 1350°C et les produits toxiques sont largement libérés.

A l'issue de la réaction de vitrification dans le creuset de fusion, les produits toxiques sont détruits lors de la combustion, ou sont bloqués dans le produit solide résultant du refroidissement rapide du magma. Ce produit solide peut alors être mis en décharge sans danger pour l'environnement. La décharge est de classe identique à celle recevant les mâchefers.

Les émissions gazeuses résultant de l'élévation de température du mélange à environ 1300°C dans le creuset de fusion sont refroidies à une température d'environ 200°C, filtrées afin d'éliminer des résidus solides restants, et ensuite éventuellement recyclées dans le four d'incinération.

Les filtres utilisés comportent des mailles suffisamment fines pour-retenir les particules solides très fines et les métaux lourds. Les filtres utilisés sont du type à manche ou à poche.

Les émissions gazeuses pendant la fusion sont constituées de dioxyde de carbone, de vapeur d'eau, de chlorure de sodium, de chlorure de potassium, de chlorure de calcium et de métaux lourds. Les teneurs sont d'environ 25% pour le dioxyde de carbone et d'environ 75% pour la vapeur d'eau. Le chlorure de sodium, le chlorure de potassium, le chlorure de calcium et les métaux lourds sont présents sous forme de traces.

On a donc réalisé suivant l'invention un procédé de traitement de résidus solides provenant de l'épuration des fumées et une installation pour la mise en oeuvre de ce procédé, qui permettent de réduire nettement la quantité de résidus solides issus de l'incinération des déchets ménagers ou industriels, mis en décharge.

La présente invention peut trouver de nombreuses applications telles que la fusion, la vitrification, la stabiliation des résidus solides issus de l'incinération, etc... .

Bien entendu, l'invention n'est nullement limitée aux modes de réalisation décrits et illustrés qui n'ont été donnés qu'à titre d'exemple.

## Revendications

1. Procédé de traitement de résidus solides provenant de l'épuration des fumées issues d'un four (1) d'incinération de déchets ménagers ou industriels du type consistant à fondre un mélange, constitué par au moins une fraction du mâchefer, directement issu de l'incinération des déchets ménagers ou industriels et des résidus solides provenant de l'épuration des fumées issues d'un four (1) d'incinération de déchets ménagers ou industriels et à récupérer, après réaction, à la sortie du four de fusion (15), des produits liquides ou pâteux et des gaz résultant de l'élévation de température, lesdits produits liquides ou pâteux étant solidifiés pour bloquer ainsi les produits toxiques, caractérisé en ce que le mélange est réalisé de façon intime avant fusion et en ce que sa fusion est effectuée à une température comprise entre 1200°C et 1350°C.

2. Procédé selon la revendication 1, caractérisé en ce que la fusion du mélange est effectuée à environ 1300°C.

3. Procédé selon la revendication 1 ou 2, caractérisé en ce que les gaz précités sont recyclés vers l'entrée du four (1) d'incinération des déchets ménagers ou industriels.

4. Procédé selon l'une quelconque des revendications précédentes, caractérisé en ce que le mélange comprend entre 10 et 90% en poids de mâchefer.

5. Procédé selon l'une quelconque des revendications précédentes, caractérisé en ce que le mélange est constitué de 30% en poids de mâchefer.

6. Installation pour la mise en oeuvre du procédé selon l'une quelconque des revendications précédentes, comprenant :
- un four d'incinération (1) alimenté en déchets ménagers ou industriels par une arrivée (2), et en air de combustion par une conduite d'arrivée (4);
- un système (5) d'évacuation des résidus solides issus directement de l'incinération des déchets ménagers ou industriels ou mâchefer;
- un système (8) d'épuration des fumées relié à la sortie du four (1) par une conduite (7);
- un système de récupération (11) des résidus solides provenant du système (8);
- deux systèmes de dosage (12') et (13') respectivement du résidu solide constitué par une fraction du mâchefer issu du four d'incinération (1), et des résidus solides d'épuration provenant du système de récupération (11); et
- un four de fusion (15) relié à la sortie des deux systèmes de dosage (12' et 13') et à l'entrée d'un système de mise en décharge (17) des produits solidifiés caractérisé en ce qu'un mélangeur (14) est interposé entre les deux systèmes de dosage précités (12' et 13') et le four de fusion (15) et en ce que le four de fusion (15) est adapté pour obtenir une température de fusion comprise entre 1200°C et 1350°C.

7. Installation selon la revendication 6, caractérisée en ce qu'un système de refroidissement (19) des gaz issus du four de fusion (15) est relié par un conduit (18) à la sortie du four de fusion (15) et à l'entrée d'un système de filtration (21), ledit système de filtration (21) étant relié au four d'incinération (1) et à un système (22) de récupération des matières solides.

8. Installation selon la revendication 6 ou 7, caractérisée en ce que les systèmes de dosage (12' et 13') sont constitués chacun par une vis doseuse ou un gravimètre.

9. Installation selon l'une quelconque des revendications 7 à 8, caractérisée en ce que le système de filtration (21) est du type à manche ou à poche.

10. Installation selon l'une quelconque des revendications 6 à 9, caractérisée en ce que le système d'épuration des fumées (8) est du type sec, semi-humide ou humide.

## Claims

1. Method of treatment of solid residues originating from the purification of the smokes exiting from a furnace (1) for the incineration of household or industrial refuse, of the type consisting in melting a mixture constituted by at least one fraction of the slag originating directly from the incineration of the household or industrial refuse and solid residues originating from the purification of the smokes exiting from a furnace (1) for the incineration of household or industrial refuse and in recovering, after reaction, at the outlet of the melting furnace (15), of the liquid or pasty products and of gases resulting from the temperature increase, the said liquid or pasty products being solidified for thus blocking the toxic products, characterized in that the mixture is provided in an intimate manner before melting and in that its melting is carried out at a temperature lying between 1200°C and 1350°C.

2. Method according to claim 1, characterized in that the melting of the mixture is carried out at about 1300°C.

3. Method according to claim 1 or 2, characterized in that the aforesaid gases are recycled towards the inlet of the furnace (1) for the incineration of the household or industrial refuse.

4. Method according to any one of the foregoing claims, characterized in that the mixture comprises between 10 and 90% by weight of slag.

5. Method according to any one of the foregoing claims, characterized in that the mixture consists of 30% by weight of slag.

6. Equipment for carrying out the method according to any one of the foregoing claims, comprising :
- an incineration furnace (1) fed with household or industrial refuse by an incoming line (2) and with combustion air by an incoming duct (4);
- a system (5) for the discharge of the solid residues exiting directly from the incineration of the household or industrial refuse or slag;
- a system (8) for the purification of the smokes, connected to the outlet of the furnace (1) by a duct (7);
- a system (11) for the recovery of the solid residues originating from the system (8);
- two systems (12') and (13') for respectively metering solid residue constituted by one fraction of the slag exiting from the incineration furnace (1) and of the solid purification residues originating from the recovery system (11);
- a melting furnace (15) connected to the outlet of both metering systems (12' and 13') and to the inlet of a system (17) for dumping the solidified products, characterized in that a mixer (14) is interposed between both aforesaid metering systems (12' and 13') and the melting furnace (15) and in that the melting furnace (15) is adapted to obtain a melting temperature lying between 1200°C and 1350°C.

7. Equipment according to claim 6, characterized in that a system (19) for cooling the gases exiting from the melting furnace (15) is connected by a duct (18) to the outlet of the melting furnace (15) and to the inlet of a filtration system (21), the said filtration system (21) being connected to the incineration furnace (1) and to a system (22) for the recovery of the solid materials.

8. Equipment according to claim 6 or 7, characterized in that the metering systems (12' and 13') are constituted each one by a metering screw or a gravimeter.

9. Equipment according to any one of claims 7 and 8, characterized in that the filtration system (21) is of the sleeve or pocket type.

10. Equipment according to any one of claims 6 to 9, characterized in that the system (8) for the purification of the smokes is of the dry, semi-moist or moist type.

## Patentansprüche

1. Verfahren zur Behandlung von von der Reinigung der aus einem Ofen (1) zur Verbrennung von Hausmüll oder Industrieabfällen austretenden Rauche stammenden festen Rückständen, derjenigen Gattung, die darin besteht, ein Gemisch zu schmelzen, das aus wenigstens einer Fraktion der von der Verbrennung des Hausmülls oder der Industrieabfälle unmittelbar stammenden Schlacke und aus den von der Reinigung der aus einem Ofen (1) zur Verbrennung von Hausmüll oder Industrieabfällen austretenden Rauche stammenden festen Rückständen besteht und in der Rückgewinnung, nach der Reaktion, am Ausgang des Schmelzofens (15), flüssige oder pastige Erzeugnisse und sich aus der Temperaturerhöhung ergebende Gase rückzugewinnen, wobei die besagten flüssigen oder pastenartigen Erzeugnisse verfestigt werden, um somit die Giftstoffe zu blockieren, dadurch gekennzeichnet, daß das Gemisch in inniger Weise vor dem Schmelzen geschaffen wird und daß sein Schmelzen bei einer zwischen 1200°C und 1350°C liegenden Temperatur durchgeführt wird.

2. Verfahren nach Anspruch 1, dadurch gekennzeichnet, daß das Schmelzen des Gemisches bei ungefähr 1300°C durchgeführt wird.

3. Verfahren nach Anspruch 1 oder 2, dadurch gekennzeichnet, daß die vorgenannten Gase zum Eingang des Ofens (1) zur Verbrennung des Hausmülls oder der Industrieabfälle rückgeführt werden.

4. Verfahren nach irgendwelchem der vorangehenden Ansprüche, dadurch gekennzeichnet, daß das Gemisch zwischen 10 und 90 Gewichtsprozent Schlacke umfaßt.

5. Verfahren nach irgendeinem der vorangehenden Ansprüche, dadurch gekennzeichnet, daß das Gemisch aus 30 Gewichtsprozent Schlacke besteht.

6. Anlage zur Durchführung des Verfahrens nach irgendeinem der vorangehenden Ansprüche, mit :
- einem mit Hausmüll oder Industrieabfällen durch eine Zufuhr (2) und mit Verbrennungsluft durch eine Zufuhrleitung (4) gespeisten Verbrennungsofen (1) ;
- einem System (5) zur Abfuhr von von der Verbrennung des Hausmülls oder der Industrieabfälle oder Schlacke unmittelbar stammenden festen Rückstä-nden ;
- einem mit dem Ausgang des Ofens (1) durch eine Leitung (7) verbundenen System (8) zur Reinigung der Rauche ;
- einem System (11) zur Rückgewinnung der aus dem System (8) stammenden festen Rückstände ;
- zwei Systemen (12') und (13') zur Dosierung jeweils des durch eine Fraktion der aus dem Verbrennungsofen (1) stammenden Schlacke gebildeten festen Rückstandes und der aus dem Rückgewinnungssystem (11) stammenden festen Reinigungsrückstände ; und
- einem mit dem Ausgang der beiden Dosierungssysteme (12' und 13') und mit dem Eingang eines Systems (17) zur Bildung einer Deponie der erstarrten Erzeugnisse verbundenen Verbrennungsofen (15), dadurch gekennzeichnet, daß ein Mischer (14) zwischen den beiden vorgenannten Dosiersystemen (12' und 13') und dem Schmelzofen (15) geschaltet ist und daß der Schmelzofen (15) geeignet ist, um eine zwischen 1200°C und 1350°C liegende Schmelztemperatur zu erzielen.

7. Anlage gemäß Anspruch 6, dadurch gekennzeichnet, daß ein System (19) zur Kühlung der aus dem Schmelzofen (15) austretenden Gase mit dem Ausgang des Schmelzofens (15) und mit dem Eingang eines Filtriersystems (21) durch eine Leitung (18) verbunden ist, wobei das Filtriersystem (21) mit dem Verbrennungsofen (1) und mit einem System (22) zur Rückgewinnung der Feststoffe verbunden ist.

8. Anlage nach Anspruch 6 oder 7, dadurch gekennzeichnet, daß die Dosierungssysteme (12' und 13') jeweils durch eine Dosierschnecke oder einen Gravimeter gebildet werden.

9. Anlage nach irgendeinem der Ansprüche 7 und 8, dadurch gekennzeichnet, daß das Filtriersystem (21) der Muffen- oder Taschenbauart ist.

10. Anlage nach irgendeinem der Ansprüche 6 bis 9, dadurch gekennzeichnet, daß das System (8) zur Reinigung der Rauche der trockenen, halbtrockenen oder feuchten Bauart ist.
